# EUROPÄISCHE PATENTSCHRIFT

(11) **EP 4 367 418 B1**
(45) Veröffentlichungstag und Bekanntmachung des Hinweises auf die Patenterteilung: **24.09.2025**
(21) Anmeldenummer: 22725766.4
(22) Anmeldetag: 26.04.2022
(51) Int. Cl.: F16J 9/14, F16J 9/26, B23P 15/06

(54) **KOMPRESSIONSRING MIT STOSSABDICHTUNG UND VERFAHREN**
COMPRESSION RING WITH ABUTTING ENDS AND METHOD
SEGMENT DE COMPRESSION AVEC COUPE EN BOUT-À-BOUT ET MÉTHODE

(30) Priorität: 17.09.2021 DE 102021124071
(43) Veröffentlichungstag der Anmeldung: 15.05.2024
(73) Patentinhaber: Federal-Mogul Burscheid GmbH, 51399 Burscheid (DE)
(72) Erfinder: SCHMIDT, Peter, 51399 Burscheid (DE); WENZELBURGER, Martin, 86150 Augsburg (DE); DUERDOTH, Stefan, 51399 Burscheid (DE)
(74) Vertreter: Kurig, Thomas
(86) Internationale Anmeldenummer: PCT/EP2022/061020
(87) Internationale Veröffentlichungsnummer: WO 2023/041205

(56) Entgegenhaltungen:
- EP-A1- 3 889 471
- DE-A1- 102014 011 532
- DE-A1- 102016 204 127
- DE-A1- 2 823 323
- JP-A- H06 281 003
- JP-U- S57 202 735

## Beschreibung

### Gebiet der Erfindung

Die vorliegende Erfindung betrifft einen Kompressionsring, insbesondere für einen Großdieselmotor-Kolbentrieb.

### Stand der Technik

Heutige 2-Takt Kreuz-Kopf-Motoren sind in der Regel mit Kompressionsringen ausgestattet, die einen sogenannten gasdichten Stoß haben. Die Bezeichnung des Stoßes ist irreführend, da über die axialen und radialen Spalte des Stoßes das Verbrennungsgas in den Raum zwischen erstem und zweiten Kompressionsring gelangt. Das heiße Verbrennungsgas transportiert Partikel aus der Verbrennung. Ist das axiale und das radiale Spaltmaß größer 0, führt dies zu einem starken abrasiven Verschleiß auf den Dichtflächen der beiden Stoßenden, was nachgelagert zu einer Ablösung der Laufflächenschicht führen kann und dies zu einem Ausfall des Systems führt. Es gilt also, den axialen und radialen Spalt so klein wie möglich zu gestalten.

Die mechanische Produktion derartiger Kompressionsringe ist aufwändig, da sich die Ringe beim Schleifprozess verziehen und so die Ausschussrate für das Merkmal des axialen und radialen Spaltmaßes hoch ist. Weiterhin sind vor allem die thermische Ausdehnung der Ringe und der Zylinder beim Betieb zu berücksichtigen, wodurch es nicht möglich ist beispielsweise einen stoßfreien Kompressionsring zu verwenden.

Es sind bereits verschiedene Ansätze bekannt wie durch teilweise Überlappungen von Vorsprüngen und Ausschnitten an dem Stoß ein nahezu gasdichter Kompressionsringstoß erreicht werden soll. Bei diesen Ausführungen besteht jedoch das Problem darin, dass jede Stufe und jede Kontaktfläche sehr genau gefertigt werden muss und auch die thermischen Ausdehnungen, wie sie bei der Inbetriebnahme und bei Lastwechseln auftreten, nicht zu einem erhöhten Verschleiß oder gar einer Zerstörung von vorhandenen Dichtstrukturen führen dürfen. Derartige Dichtstrukturen sind beispielsweise aus der Österreichischen Patentanmeldung AT 85885 B oder der Europäischen Patentanmeldung EP 3 096 044 A1 bekannt. DE 10 2016 204 127 A1 offenbart einen Kompressionsring, wobei die Stoßendbereiche zweistufig ausgebildet sind und wobei ein Anlageabschnitt der Stoßendbereiche mit einer Gleitbeschichtung versehen sein kann.

### Zusammenfassung der Erfindung

Die Erfindung betrifft gemäß einem ersten Aspekt einen Kompressionsring gemäß Anspruch 1, umfassend eine Ringlauffläche an einem ersten Stoßendbereich, eine Ringlauffläche an einem zweiten Stoßendbereich, eine Ringinnenfläche, eine obere Ringflankenfläche und eine untere Ringflankenfläche, wobei der Ring einander überlappende Stoßendbereiche aufweist, wobei der erste Stoßendbereich wenigstens einen Vorsprung in Umfangsrichtung aufweist und der zweite Stoßendbereich wenigstens eine Ausnehmung in Umfangsrichtung aufweist, wobei der wenigstens eine Vorsprung wenigstens eine axiale und radiale Überlappungsoberfläche bildet und die wenigstens eine Ausnehmung wenigstens eine der axialen und radialen Überlappungsoberfläche zumindest teilweise gegenüberliegende und parallele Fläche bildet, um sich bei einer Änderung des Stoßspiels parallel zueinander zu verschieben, wobei wenigstens eine der parallel zueinander verschiebbaren Flächen mit einem axialen Verschleißelement und / oder mit einem radialen Verschleißelement versehen ist.

Die Idee ist, ein Verschleißelement in den axialen und/oder radialen Spalt des Kompressionsrings im Bereich des Stosses einzubringen, wobei die axiale und radiale Überlappungsoberfläche des Vorsprungs der axialen und radialen Überlappungsoberfläche zumindest teilweise gegenüberliegt, sodass sie sich bei einer Änderung des Stoßspiels parallel zueinander verschieben. Auf wenigstens einer dieser parallel zueinander verschiebbaren Flächen ist wenigstens ein Verschleißelement zur Abdichtung des axialen und / oder radialen Ringspalts aufgebracht, wobei die parallel zueinander verschiebbaren Flächen eingerichtet sind, sich bei einer Änderung des Stoßspiels im Wesentlichen zueinander parallel zu verschieben, wodurch der Verschleiß minimiert wird.

Es ist bevorzugt, dass der Ring im Nenndurchmesser die einander überlappenden Stoßendbereiche aufweist.

Es ist bevorzugt, dass die sich parallel zueinander verschiebbaren Flächen im Nenndurchmesser zumindest teilweise gegenüberliegen.

Der Nenndurchmesser bzw. das Nennmaß ist das für den Einbau des Rings vorgesehene theoretische Maß.

Es ist bevorzugt, dass das Verschleißelement eine Mindestdicke von 0,005 mm aufweist.

Gemäß der Erfindung, weist das Verschleißelement unterschiedliche übereinander angeordnete Verschleißschichten auf, die unterschiedliche Materialien beinhalten.

Gemäß der Erfindung, weist das Material des Verschleißelements eine niedrigere Verschleißbeständigkeit auf als das Grundmaterial des Ringes.

Das Verschleißelement ist aus einem temperaturbeständigen Material mit einer geringen Verschleißbeständigkeit, wie z.B. Kupfer, Zinn, Bronze, oder Legierungen etc. hergestellt. Die Erweichungstemperatur dieses Materials muß die höchsten erreichbaren Temperaturen im Motorbetrieb aushalten.

Es ist bevorzugt, dass das Verschleißelement 10-100 % der Fläche, auf der das Verschleißelement angeordnet ist, überdeckt bzw. abdeckt.

Es ist bevorzugt, dass das Verschleißelement in Axialrichtung und / oder Radialrichtung mit einem Abstand zu einem Rand der Fläche, auf der das Verschleißelement angeordnet ist, angeordnet ist.

Gemäß der Erfindung, sind die Stoßendbereiche zweistufig ausgebildet.

Es ist bevorzugt, dass die Stoßendbereiche treppenförmig ausgebildet sind.

Es ist bevorzugt, dass wenigstens eine Oberfläche, die in einer Ebene liegt, die durch eine Ringaxial- und Ringradialrichtung aufgespannt wird, und in dem zweiten Stoßendbereich angeordnet ist, eine erste Struktur aufweist, die in wenigstens eine Oberfläche, die in einer Ebene liegt, die durch eine Ringaxial- und Ringradialrichtung aufgespannt wird, und in dem ersten Stoßendbereich angeordnet ist, eingreift.

Dadurch wird eine zusätzliche Abdichtung des axialen Ringspalts erzeugt. Strukturen können gleichgerichtet, sich kreuzend und / oder ungeordnet sein, wie z.B. gerade, kreisbogenförmig oder flächig versetzt, und / oder eine Rauheit Ra aufzuweisen, die 0,2-12,5 µm, bevorzugt 0,4-10 µm, besonders bevorzugt 0,8-6,3 µm beträgt.

Es ist bevorzugt, dass eine Festigkeit des Verschleißelements 1-80 %, bevorzugt 1-40 %, besonders bevorzugt 1-20 % geringer ist als eine Festigkeit des Kompressionsrings.

Die Erfindung betrifft gemäß einem weiteren Aspekt ein Verfahren gemäß Anspruch 10, zum Einschleifen eines Kompressionsrings, wobei das Verfahren umfasst die Schritte von Aufbringen eines Verschleißelements durch Draht-Einwalzen in eine Nut, Laserumschmelzen, Laserauftragschweißen, Auftragsschweißen, thermisches Spritzen und / oder galvanischer oder chemischer Abscheidung oder Aufsintern und Bewegen der Stoßendbereiche gegeneinander, um einen Verschleiß des Verschleißelements zu erzeugen, bis das Nennmaß in Axial- und / oder Radialrichtung des Kompressionsrings erreicht wird.

Im Betrieb des Motors macht der Stoß des Ringes eine zyklische, öffnende und schließende Bewegung in Umfangsrichtung durch die Durchmesserveränderung über Temperatur und die temperaturabhängige Durchmesseränderung über dem Hub und wird so das in das Spaltmaß hinein ragende Material abschleifen. Der Verschleiß des Veschleißelements soll gezielt sein, d.h. es wird solange eingeschliffen, bis das Nennmaß des Rings in axialer und radialer Richtung erreicht ist.

Das einzubringende Material soll am Ende des eigentlichen Fertigungsprozesses eingebracht werden und dann mit wenigestens 0,05 mm über das gemessene axiale Spaltmaß ohne das Verschleißmaterial hinaus gehen.

### Kurze Beschreibung der Zeichnungen

Im Folgenden werden beispielhafte Ausführungsformen der Erfindung unter Bezugnahme auf die Zeichnungen genauer beschrieben, wobei
Fig. 1 Stoßendbereiche mit axialer Stossabdichtung des erfindungsgemäßen Kompressionsrings und
Fig. 2 Stoßendbereiche mit axialer und radialer Stossabdichtung des erfindungsgemäßen Kompressionsrings zeigt.

### Ausführliche Beschreibung der Zeichnungen

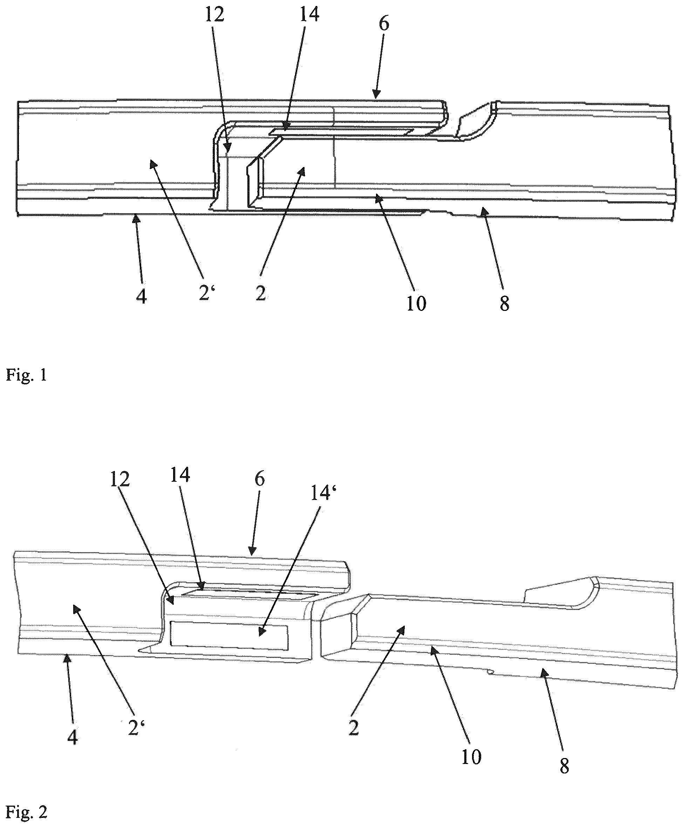

Fig. 1 zeigt Stoßendbereiche mit axialer Stossabdichtung des erfindungsgemäßen Kompressionsrings. Der Kompressionsring umfasst eine Ringlauffläche 2 an einem ersten Stoßendbereich, eine Ringlauffläche 2' an einem zweiten Stoßendbereich, eine Ringinnenfläche 4, eine obere Ringflankenfläche 6 und eine untere Ringflankenfläche 8. Ein erster Stoßendbereich weist einen quaderförmigen Vorsprung 10 in Umfangsrichtung und ein zweiter Stoßendbereich eine dazu passende quaderförmige Ausnehmung 12 ebenfalls in Umfangsrichtung auf. Der Vorsprung 10 und die Ausnehmung 12 bilden einen Überlappungsbereich aus jeweils zwei gegenüberliegenden gleich ausgerichteten Flächen in Axial- und Radialrichtung. Zumindest im Nenndurchmesser bzw. Nennmaß, d.h. dem für den Einbau des Rings vorgesehene theoretische Maß, liegen sich die gegenüberliegenden Flächen zumindest teilweise gegenüber. Auf der zur Axialrichtung senkrecht stehenden Fläche in Ausnehmung 12 ist ein Verschleißelement 14 angeordnet, das die Fläche, auf der es aufgebracht ist, nicht vollständig überdeckt und in Radialrichtung mittig und in Umfangsrichtung in Richtung Ringspalt versetzt angeordnet ist. Zudem ist das Verschleißelement 14 zu den Rändern der Fläche, auf der es aufgebracht ist, beabstandet angeordnet.

Ferner ist in Fig. 1 zu erkennen, dass beide Stoßendbereiche zweistufig ausgebildet sind, wobei eine radiale Abmessung des Vorsprungs 10 etwa 2/3 des radialen Nennmaßes des Kompressionsrings und eine axiale Abmessung des Vorsprungs 10 etwa 3/4 des axialen Nennmaßes des Kompressionsrings entspricht. Der erste Stoßendbereich weist ein erstes Stoßende auf, das dem höchsten Punkt des Vorsprungs 10 entspricht und sich in einer durch eine Ringaxial- und Ringradialrichtung aufgespannte Ebene befindet. Der zweite Stoßendbereich weist eine Oberfläche auf, die sich ebenso in einer durch eine Ringaxial- und Ringradialrichtung aufgespannte Ebene befindet, jedoch dem tiefsten Punkt der Ausnehmung 12 entspricht. Sowohl das erste Stoßende als auch die Oberfläche liegen einander gegenüber.

Folgende Flächen können in Fig. 1 in Flächenkontakt kommen: die zur Axialrichtung senkrecht stehende Fläche an Vorsprung 10 mit der zur Axialrichtung senkrecht stehenden Fläche an Ausnehmung 12, sowie die zur Radialrichtung senkrecht stehende Fläche an Vorsprung 10 mit der zur Radialrichtung senkrecht stehenden Fläche an Ausnehmung 12 und die zur Umfangsrichtung senkrecht stehende Fläche an Vorsprung 10, die dem höchsten Punkt des Vorsprungs 10 entspricht, mit der zur Umfangsrichtung senkrecht stehenden Fläche an Ausnehmung 12, die dem tiefsten Punkt der Ausnehmung 12 entspricht. Der höchste Punkt der Ausnehmung 12 bildet ein zweites Stoßende und kann nicht in Flächenkontakt mit der gegenüberliegenden Oberfläche in dem ersten Stoßendbereich kommen, da diese eine Krümmung aufweist.

Fig. 2 zeigt Stoßendbereiche mit axialer und radialer Stossabdichtung des erfindungsgemäßen Kompressionsrings. Der Kompressionsring umfasst eine Ringlauffläche 2 an einem ersten Stoßendbereich, eine Ringlauffläche 2' an einem zweiten Stoßendbereich, eine Ringinnenfläche 4, eine obere Ringflankenfläche 6 und eine untere Ringflankenfläche 8. Ein erster Stoßendbereich weist einen quaderförmigen Vorsprung 10 in Umfangsrichtung und ein zweiter Stoßendbereich eine dazu passende quaderförmige Ausnehmung 12 ebenfalls in Umfangsrichtung auf. Der Vorsprung 10 und die Ausnehmung 12 bilden einen Überlappungsbereich aus jeweils zwei gegenüberliegenden gleich ausgerichteten Flächen in Axial- und Radialrichtung. Zumindest im Nenndurchmesser bzw. Nennmaß, d.h. dem für den Einbau des Rings vorgesehene theoretische Maß, liegen sich die gegenüberliegenden Flächen zumindest teilweise gegenüber. Auf der zur Axialrichtung senkrecht stehenden Fläche in Ausnehmung 12 ist ein axiales Verschleißelement 14 und auf der zur Radialrichtung senkrecht stehenden Fläche in Ausnehmung 12 ist ein radiales Verschleißelement 14' angeordnet. Beide Verschleißelemente 14, 14' überdecken die Fläche, auf der sie aufgebracht sind, nicht vollständig und sind auf der jeweiligen Aufbringungsfläche in Radialrichtung bzw. Axialrichtung und in Umfangsrichtung auf dieser Fläche mittig angeordnet. Zudem sind Verschleißelemente 14, 14' zu den Rändern der Fläche, auf der sie aufgebracht ist, beabstandet angeordnet.

Ferner ist in Fig. 2 zu erkennen, dass beide Stoßendbereiche zweistufig ausgebildet sind, wobei eine radiale Abmessung des Vorsprungs 10 etwa 2/3 des radialen Nennmaßes des Kompressionsrings und eine axiale Abmessung des Vorsprungs 10 etwa 3/4 des axialen Nennmaßes des Kompressionsrings entspricht. Der erste Stoßendbereich weist ein erstes Stoßende auf, das dem höchsten Punkt des Vorsprungs 10 entspricht und sich in einer durch eine Ringaxial- und Ringradialrichtung aufgespannte Ebene befindet. Der zweite Stoßendbereich weist eine Oberfläche auf, die sich ebenso in einer durch eine Ringaxial- und Ringradialrichtung aufgespannte Ebene befindet, jedoch dem tiefsten Punkt der Ausnehmung 12 entspricht. Sowohl das erste Stoßende als auch die Oberfläche liegen einander gegenüber.

Folgende Flächen können in Fig. 2 in Flächenkontakt kommen: die zur Axialrichtung senkrecht stehende Fläche an Vorsprung 10 mit der zur Axialrichtung senkrecht stehenden Fläche an Ausnehmung 12, die zur Radialrichtung senkrecht stehende Fläche an Vorsprung 10 mit der zur Radialrichtung senkrecht stehenden Fläche an Ausnehmung 12 und die zur Umfangsrichtung senkrecht stehende Fläche an Vorsprung 10, die dem höchsten Punkt des Vorsprungs 10 entspricht, mit der zur Umfangsrichtung senkrecht stehenden Fläche an Ausnehmung 12, die dem tiefsten Punkt der Ausnehmung 12 entspricht. Der höchste Punkt der Ausnehmung 12 bildet ein zweites Stoßende und kann nicht in Flächenkontakt mit der gegenüberliegenden Oberfläche in dem ersten Stoßendbereich kommen, da diese eine Krümmung aufweist.

### Bezugszeichenliste

- 2: Ringlauffläche an erstem Stoßendbereich
- 2': Ringlauffläche an zweitem Stoßendbereich
- 4: Ringinnenfläche
- 6: obere Ringflankenfläche
- 8: untere Ringflankenfläche
- 10: Vorsprung
- 12: Ausnehmung
- 14: axiales Verschleißelement
- 14': radiales Verschleißelement

## Patentansprüche

1. Kompressionsring, umfassend
eine Ringlauffläche (2) an einem ersten Stoßendbereich,
eine Ringlauffläche (2') an einem zweiten Stoßendbereich,
eine Ringinnenfläche (4),
eine obere Ringflankenfläche (6) und
eine untere Ringflankenfläche (8),
wobei der Ring einander überlappende Stoßendbereiche aufweist,
wobei der erste Stoßendbereich wenigstens einen Vorsprung (10) in Umfangsrichtung aufweist und der zweite Stoßendbereich wenigstens eine Ausnehmung (12) in Umfangsrichtung aufweist,
wobei der wenigstens eine Vorsprung (10) wenigstens eine axiale und radiale Überlappungsoberfläche bildet und die wenigstens eine Ausnehmung (12) wenigstens eine der axialen und radialen Überlappungsoberfläche zumindest teilweise gegenüberliegende und parallele Fläche bildet, um sich bei einer Änderung des Stoßspiels parallel zueinander zu verschieben, und
wobei die Stoßendbereiche zweistufig ausgebildet sind,
wobei wenigstens eine der parallel zueinander verschiebbaren Flächen mit einem axialen Verschleißelement (14) und / oder mit einem radialen Verschleißelement (14') versehen ist,
wobei das Verschleißelement (14, 14') aus einem temperaturbeständigen Material hergestellt ist,
**dadurch gekennzeichnet, dass**
das Material des Verschleißelements (14, 14') eine niedrigere Verschleißbeständigkeit aufweist als das Grundmaterial des Kompressionsringes,
wobei das Verschleißelement (14, 14') unterschiedliche übereinander angeordnete Verschleißschichten aufweist, die unterschiedliche Materialien beinhalten.

2. Kompressionsring nach Anspruch 1, wobei der Ring im Nenndurchmesser die einander überlappenden Stoßendbereiche aufweist.

3. Kompressionsring nach einem der vorhergehenden Ansprüche, wobei die sich parallel zueinander verschiebbaren Flächen im Nenndurchmesser zumindest teilweise gegenüberliegen.

4. Kompressionsring nach einem der vorhergehenden Ansprüche, wobei das Verschleißelement (14, 14') eine Mindestdicke von 0,005 mm aufweist.

5. Kompressionsring nach einem der vorhergehenden Ansprüche, wobei das Verschleißelement (14, 14') 10-100 % der Fläche, auf der das Verschleißelement (14, 14') angeordnet ist, überdeckt bzw. abdeckt.

6. Kompressionsring nach einem der vorhergehenden Ansprüche, wobei das Verschleißelement (14, 14') in Axialrichtung und / oder Radialrichtung mit einem Abstand zu einem Rand der Fläche, auf der das Verschleißelement (14, 14') angeordnet ist, angeordnet ist.

7. Kompressionsring nach einem der vorhergehenden Ansprüche, wobei die Stoßendbereiche treppenförmig ausgebildet sind.

8. Kompressionsring nach einem der vorhergehenden Ansprüche, wobei wenigstens eine Oberfläche, die in einer Ebene liegt, die durch eine Ringaxial- und Ringradialrichtung aufgespannt wird, und in dem zweiten Stoßendbereich angeordnet ist, eine erste Struktur aufweist, die in wenigstens eine Oberfläche, die in einer Ebene liegt, die durch eine Ringaxial- und Ringradialrichtung aufgespannt wird, und in dem ersten Stoßendbereich angeordnet ist, eingreift.

9. Kompressionsring nach einem der vorhergehenden Ansprüche, wobei eine Festigkeit des Verschleißelements (14, 14') 1-80 %, bevorzugt 1-40 %, besonders bevorzugt 1-20 % geringer ist als eine Festigkeit des Kompressionsrings.

10. Verfahren zum Einschleifen eines Kompressionsrings nach Ansprüchen 1-9, wobei das Verfahren umfasst die Schritte von:
- Aufbringen eines Verschleißelements (14, 14') durch Draht-Einwalzen in eine Nut, Laserumschmelzen, Laserauftragschweißen, Auftragsschweißen, thermisches Spritzen und / oder galvanischer oder chemischer Abscheidung oder Aufsintern, und
- Bewegen der Stoßendbereiche gegeneinander, um einen Verschleiß des Verschleißelements (14, 14') zu erzeugen, bis das Nennmaß in Axial- und / oder Radialrichtung des Kompressionsrings erreicht wird.

## Claims

1. A compression ring, comprising
a ring running surface (2) on a first butt end region,
a ring running surface (2') on a second butt end region,
a ring inner surface (4),
a top ring flank surface (6) and
a bottom ring flank surface (8),
wherein the ring has overlapping butt end regions,
wherein the first butt end region has at least one protrusion (10) in the circumferential direction, and the second butt end region has at least one recess (12) in the circumferential direction,
wherein the at least one protrusion (10) forms at least one axial and radial overlap surface, and the at least one recess (12) forms at least a surface, which lies at least partially opposite and parallel to the axial and radial overlap surface in order to shift parallel to one another in response to a change of the butt play,
wherein the butt end regions are formed with two steps,
wherein at least one of the surfaces, which can be shifted parallel to one another, is provided with an axial wear element (14) and / or with a radial wear element (14'),
wherein the wear element (14, 14') is made of a temperature-resistant material,
**characterized in that**
the material of the wear element (14, 14') has a lower wear resistance than the base material of the compression ring,
wherein the wear element (14, 14') has different wear layers arranged one on top of the other, which include different materials.

2. The compression ring according to claim 1, wherein the ring has the overlapping butt end regions in the nominal diameter.

3. The compression ring according to one of the preceding claims, wherein the surfaces, which can be shifted parallel to one another, lie at least partially opposite one another in the nominal diameter.

4. The compression ring according to one of the preceding claims, wherein the wear element (14, 14') has a minimum thickness of 0.005 mm.

5. The compression ring according to one of the preceding claims, wherein the wear element (14, 14') overlaps or covers, respectively, 10-100 % of the surface, on which the wear element (14, 14') is arranged.

6. The compression ring according to one of the preceding claims, wherein the wear element (14, 14') is arranged in axial direction and / or radial direction at a distance from an edge of the surface, on which the wear element (14, 14') is arranged.

7. The compression ring according to one of the preceding claims, wherein the butt end regions are formed in a staircase-shaped manner.

8. The compression ring according to one of the preceding claims, wherein at least one surface, which lies in a plane, which is spanned by a ring axial and ring radial direction and which is arranged in the second butt end region, has a first structure, which engages with at least one surface, which lies in one plane, which is spanned by a ring axial and ring radial direction and which is arranged in the first butt end region.

9. The compression ring according to one of the preceding claims, wherein a strength of the wear element (14, 14') is 1-80 %, preferably 1-40 %, particularly preferably 1-20 % less than a strength of the compression ring.

10. A method for grinding in a compression ring according to claims 1-9, wherein the method comprises the steps of:
- applying a wear element (14, 14') by means of wire rolling into a groove, laser remelting, laser metal deposition, deposition welding, thermal spraying and / or galvanic or chemical deposition or sintering and
- moving the butt end regions against one another in order to create a wear of the wear element (14, 14'), until the nominal size in axial and / or radial direction of the compression ring is reached.

## Revendications

1. Bague de compression, comprenant
une surface de roulement de bague (2) au niveau d'une première extrémité de butée,
une surface de roulement de bague (2') au niveau d'une deuxième extrémité de butée,
une surface intérieure de bague (4),
un flanc supérieur de bague (6) et
un flanc inférieur de bague (8),
dans laquelle la bague présente des extrémités de butée qui se chevauchent,
dans laquelle la première extrémité de butée présente au moins une protubérance (10) dans la direction circonférentielle et la deuxième extrémité de butée présente au moins un évidement (12) dans la direction circonférentielle,
dans laquelle la au moins une protubérance (10) forme au moins une surface de chevauchement axiale et radiale et le au moins un évidement (12) forme au moins une surface partiellement opposée et parallèle aux surfaces de chevauchement axiale et radiale afin de se déplacer parallèlement l'une à l'autre lors d'une modification du jeu d'extrémité et
dans laquelle les extrémités de butée sont formées en deux étapes,
dans laquelle au moins une des surfaces mutuellement déplaçables parallèlement est pourvue d'un élément d'usure axial (14) et/ou d'un élément d'usure radial (14'),
dans laquelle l'élément d'usure (14, 14') est constitué d'un matériau résistant à la température,
**caractérisé en ce que** le matériau de l'élément d'usure (14, 14') présente une résistance à l'usure inférieure à celle du matériau de base de la bague de compression,
dans laquelle l'élément d'usure (14, 14') présente différentes couches d'usure superposées, qui contiennent des matériaux différents.

2. Bague de compression selon la revendication 1, dans laquelle la bague présente des extrémités qui se chevauchent sur le diamètre nominal.

3. Bague de compression selon une des revendications précédentes, dans laquelle les surfaces déplaçables parallèlement l'une à l'autre sont au moins partiellement opposées sur le diamètre nominal.

4. Bague de compression selon une des revendications précédentes, dans laquelle l'élément d'usure (14, 14') présente une épaisseur minimale de 0,005 mm.

5. Bague de compression selon une des revendications précédentes, dans laquelle l'élément d'usure (14, 14') recouvre 10 à 100 % de la surface sur laquelle l'élément d'usure (14, 14') est disposé.

6. Bague de compression selon une des revendications précédentes, dans laquelle l'élément d'usure (14, 14') est disposé dans la direction axiale et/ou la direction radiale à distance d'un bord de la surface, sur laquelle l'élément d'usure (14, 14') est disposé.

7. Bague de compression selon une des revendications précédentes, dans laquelle les extrémités de butée sont en forme de gradins.

8. Bague de compression selon une des revendications précédentes, dans laquelle au moins une surface située dans un plan englobant une direction axiale et une direction radiale de bague et disposée dans la deuxième extrémité de butée présente une première structure, qui s'engage dans au moins une surface située dans un plan englobant une direction axiale et une direction radiale de bague et disposée dans la première extrémité de butée.

9. Bague de compression selon une des revendications précédentes, dans laquelle une résistance de l'élément d'usure (14, 14') est inférieure de 1 à 80%, de préférence de 1 à 40%, et de préférence encore de 1 à 20% à une résistance de la bague de compression.

10. Procédé de rectification d'une bague de compression selon les revendications 1 à 9, dans lequel le procédé comprend les étapes suivantes :
- application d'un élément d'usure (14, 14') par laminage de fil dans une rainure, refusion laser, placage laser, revêtement par soudage, projection thermique et/ou dépôt galvanique ou chimique ou frittage et
- rapprochement des extrémités de butées, pour générer une usure de l'élément d'usure (14, 14') jusqu'à atteindre la dimension nominale dans la direction axiale et/ou radiale de la bague de compression.
